Europäisches Patentamt

European Patent Office

Office européen des brevets

(11) Numéro de publication: **0 325 502 B1**

(12) **FASCICULE DE BREVET EUROPEEN**

(45) Date de publication de fascicule du brevet: **16.06.93**  (51) Int. Cl.⁵: **C10G  11/18**, C10G 11/05, B01J 29/06

(21) Numéro de dépôt: **89400061.1**

(22) Date de dépôt: **10.01.89**

Le dossier contient des informations techniques présentées postérieurement au dépôt de la demande et ne figurant pas dans le présent fascicule.

(54) **Procédé de craquage catalytique.**

(30) Priorité: **21.01.88 FR 8800763**
**04.03.88 FR 8802903**

(43) Date de publication de la demande:
**26.07.89 Bulletin  89/30**

(45) Mention de la délivrance du brevet:
**16.06.93 Bulletin  93/24**

(84) Etats contractants désignés:
**AT BE DE GB NL**

(56) Documents cités:
**EP-A- 0 020 154**
**FR-A- 2 251 615**
**US-A- 3 706 654**

(73) Titulaire: **INSTITUT FRANCAIS DU PETROLE**
**4, avenue de Bois Préau**
**F-92502 Rueil-Malmaison(FR)**

(72) Inventeur: **Marcilly, Christian**
**91 ter rue Condorcet**
**F-78800 Houilles(FR)**
Inventeur: **Deves, Jean-Marie**
**75, rue des Bons Raisins**
**F-92500 Rueil Malmaison(FR)**
Inventeur: **Bourgogne, Michel**
**25, rue Léonard de Vinci**
**F-76620 Le Havre(FR)**

**Description**

La présente invention entre dans le cadre du craquage catalytique à l'état fluide de charges d'hydrocarbures.

On sait que l'industrie pétrolière utilise de façon usuelle des procédés de craquage, dans lesquels des molécules d'hydrocarbures à haut poids moléculaire et à point d'ébullition élevé sont scindées en molécules plus petites, qui bouillent dans des domaines de températures plus faibles, convenant à l'usage recherché.

Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est vaporisée par mise en contact à haute température avec un catalyseur de craquage, lequel est maintenu en suspension dans les vapeurs de la charge. Après que l'on ait atteint par craquage la gamme de poids moléculaire désirée, avec un abaissement correspondant des points d'ébullition, le catalyseur est séparé des produits obtenus, strippé, régénéré par combustion du coke formé, puis remis en contact avec la charge à craquer.

Dans de nouveaux procédés FCC, on peut utiliser deux zones de régénération à travers lesquelles circule le catalyseur usé.

Les charges à craquer sont habituellement injectées dans la zone réactionnelle à une température généralement comprise entre 480 et 540°C, sous une pression relative de 0,7 à 3,5 bar, tandis que la température du catalyseur régénéré qui arrive dans cette zone peut être de l'ordre de 600 à 950°C.

Dans le procédé de l'invention, le catalyseur est introduit soit à la base soit au sommet d'une zone tubulaire sensiblement verticale, servant de zone réactionnelle ; ce type de zone fonctionne ainsi, soit comme un tube ascendant (ou comme un élévateur) connu sous sa dénomination en langue anglaise "riser", soit comme un tube descendant, connu également sous sa dénomination en langue anglaise "dropper". Le catalyseur est introduit en une quantité déterminée par exemple par l'ouverture ou la fermeture d'une vanne. Les grains de catalyseur sont alors accélérés vers le haut ou vers le bas du tube par injection à la base ou au sommet de ce dernier, d'un fluide gazeux. Cette injection est faite à l'aide d'un distributeur de fluide. La charge à craquer est introduite en aval et vaporisée, aussi complètement que possible, à l'aide d'un dispositif approprié dans le flux dense de grains de catalyseur.

A l'extrémité du tube sont agencées des enceintes dans lesquelles s'effectuent, d'une part, la séparation de la charge craquée et, d'autre part, le strippage du catalyseur usé et éventuellement sa régénération.

Dans la variante à "tube ascendant", le catalyseur est introduit à la base d'un élévateur du type ascendant (ou "riser") en une quantité déterminée par exemple par l'ouverture ou la fermeture d'une vanne. Les grains de catalyseurs sont alors conditionnés et accélérés vers le haut du "riser" par injection à la base de ce dernier, d'un fluide gazeux. Cette injection est faite à l'aide d'un distributeur de fluide. La charge à craquer est introduite à un niveau supérieur et vaporisée au moins partiellement à l'aide d'un dispositif approprié dans le flux dense de grains de catalyseur.

Le "riser" débouche à son sommet dans une enceinte qui lui est par exemple concentrique et dans laquelle s'effectuent, d'une part, la séparation de la charge craquée et, d'autre part, le strippage du catalyseur usé. Le catalyseur est séparé de l'effluent, entraîné par un système cyclonique, puis épuré et purifié.

Dans la variante à "tube descendant", le catalyseur est introduit au sommet d'un tube du type descendant (ou "dropper") en une quantité déterminée par exemple par l'ouverture ou la fermeture d'une vanne. Les grains de catalyseurs sont alors accélérés vers le bas du "dropper" par injection au sommet de ce dernier, d'un fluide gazeux.

Dans le cas des systèmes à double régénération, tel que le procédé commercial appelé "R2R", les particules de catalyseur usé sont évacuées après strippage vers un premier régénérateur, Dans ce régénérateur, le coke déposé sur les particules du catalyseur est brûlé partiellement à l'aide d'air conduisant à la production de CO et $CO_2$ ; le gaz de combustion est épuré du catalyseur entraîné par des cyclones puis évacué ; les particules du catalyseur ayant ainsi subi un premier traitement partiel de régénération sont ensuite transférées dans un second étage du régénérateur, distinct du premier. Dans ce régénérateur, la combustion du coke restant en $CO_2$ est réalisée avec de l'air en excès. Les gaz de combustion sont séparés du catalyseur, entraînés par des cyclones puis sont évacués.

Les charges d'hydrocarbures susceptibles d'être injectées dans les unités du type décrit plus haut peuvent contenir des hydrocarbures ayant des points d'ébullition se situant entre 200 et 550°C ou plus, et leur densité peut varier entre 10 et 35°API. Ces charges également, peuvent être des charges lourdes contenant des hydrocarbures dont le point d'ébullition peut aller jusqu'à 750°C et plus, et dont la densité peut varier entre 10 et 35°API, voire entre 0 et 25°API.

Par exemple, on peut citer comme charges, celles présentant des points d'ébullition finaux de l'ordre de 400°C, tels que des gazoles sous vide, mais aussi des huiles hydrocarbonées plus lourdes, telles que des pétroles bruts et/ou stabilisés, et des résidus de distillation atmosphérique ou de distillation sous vide ; ces charges peuvent le cas échéant avoir reçu un traitement préalable tel que, par exemple, un hydrotraitement en présence par exemple de catalyseurs de type cobalt-molybdène ou nickel-molybdène. Les charges préférées de l'invention seront celles contenant des fractions bouillant normalement jusqu'à 700°C et plus, pouvant contenir des pourcentages élevés de produits asphalténiques, et présenter une teneur en carbone Conradson allant jusqu'à 10 % et au-delà. Ces charges peuvent être diluées ou non par des coupes plus légères conventionnelles, pouvant inclure des coupes d'hydrocarbures ayant déjà subi l'opération de craquage, qui sont recyclées, comme par exemple des huiles légères de recyclage ("light cycle oils", L.C.O.) ou des huiles lourdes de recyclage ("heavy cycle oils", H.C.O.). Suivant le mode préféré de l'invention, ces charges sont disponibles et préchauffées dans un domaine de température compris entre 300 et 450°C avant leur traitement.

La présente invention concerne un procédé de craquage catalytique qui permet d'améliorer la flexibilité sur la structure des rendements en produits et simultanément, la qualité de la coupe essence, c'est-à-dire les indices d'octane recherche et moteur. Il arrive en effet quelquefois qu'un objectif de raffinage, dans le cadre d'un craquage catalytique, soit l'obtention d'un maximum de gaz de pétrole liquéfiés (C3-C4) (LPG) et l'obtention simultanée soit d'un maximum d'essence d'indice d'octane élevé soit plus rarement d'un maximum de distillat léger (généralement appelé Light cycle oil ou "L.C.O."). Dans le second cas, une telle opération est normalement incompatible puisqu'il faudrait pouvoir augmenter la sévérité du craquage catalytique pour obtenir le maximum de L.P.G. et la diminuer pour maximiser la production de L.C.O.

La présente invention permet d'atteindre les objectifs précédents et notamment de remédier à l'incompatibilité précédente ; pour ce, on propose un procédé qui consiste à envoyer en amont de la charge une essence hydrocarbonée fraîche (straight run) ou provenant d'un recyclage (essence de conversion) d'une partie au moins de l'essence obtenue dans l'effluent de la zone de craquage catalytique. On rappelle que d'une façon générale, dans le domaine du craquage catalytique, la mise en oeuvre du procédé dépend notamment de la nature des effluents hydrocarbonés que souhaite obtenir l'utilisateur en fonction des objectifs de raffinage du moment : ainsi d'une façon générale un craquage catalytique d'une huile permet d'obtenir :

- des gaz légers (hydrogène, hydrocarbures à 1 et 2 atomes de carbone par molécule,
- du propylène,
- du propène (C3$^{=}$),
- des hydrocarbures à 4 atomes de carbone par molécule (C4 saturés et iso C4),
- des hydrocarbures insaturés à 4 atomes de carbone,
- des essences,
- une huile relativement légère ou diluant léger ("light cycle oil" ou "L.C.O."),
- une huile relativement lourde ou diluant lourd ("heavy cycle oil" ou "H.C.O.",
- un résidu ou "slurry" qui est généralement purifié du catalyseur entraîné pour obtenir une huile clarifiée ("clarified oil" ou C.O.) ou une huile décantée ("Decanted oil ou D.O.).

Certains utilisateurs cherchent soit à augmenter sensiblement la production de C3 insaturé (propylène) sans augmenter la production d'hydrocarbures en C4 et des gaz secs saturés (H2, C1, C2), soit à améliorer sensiblement la production de C3 insaturé (propylène) et d'iso C4 sans augmenter notablement la production de gaz secs saturés (H2, C1, C2), soit à augmenter sensiblement la production de C3 insaturé (propylène) et éventuellement des C4, notamment insaturés, sans augmenter la production des gaz secs saturés (H2, C1, C2). Dans les 3 cas, il est le plus souvent recherché d'y associer une production maximale d'essence d'indice d'octane particulièrement élevé.

Ce sont les 2 dernières possibilités qui sont recherchées dans la présente demande de brevet et qui peuvent être obtenues par l'emploi d'un nouveau catalyseur spécifique de craquage catalytique, ou par l'emploi d'un additif à un catalyseur conventionnel, cet additif étant défini comme le nouveau dit catalyseur spécifique de craquage catalytique.

Le brevet US-A-3706 654 décrit un procédé de craquage catalytique dans lequel le catalyseur comprend une zéolithe. Le brevet FR 2251 615 décrit des catalyseurs de craquage comprenant une zéolithe de type sous la forme terre rare hydrogène et une seconde zéolithe qui est soit une mordénite sous forme métal ou hydrogène, soit une zéolithe A sous forme calcium, soit une érionite sous la forme hydrogène.

Parmi les zéolithes susceptibles de permettre l'obtention d'un catalyseur susceptible d'améliorer les rendements en produits légers à 3 et 4 atomes de carbone et notamment en propylène, on a découvert de façon surprenante que les zéolithes de la famille de l'érionite, telle que l'offrétite, possèdent ces propriétés. Elles permettent d'obtenir ainsi des rendements en propylène et des indices d'octane de l'essence nettement supérieurs à ceux qui peuvent être obtenus avec les catalyseurs zéolithiques classiques de craquage, surtout lorsqu'elles sont utilisées en additif de ces derniers. Parmi ces zéolithes de la famille érionite, on a découvert de plus que les offrétites stabilisées et désaluminées, caractérisées notamment par un rapport molaire silice sur alumine supérieur ou égal à 15, permettent d'obtenir des catalyseurs particulièrement performants. L'une des zéolithes préférées de la présente invention est l'offrétite stabilisée et désaluminée. Elle est obtenue à l'aide de traitements modificateurs qui permettent d'ajuster à volonté la composition en aluminium et en silicium de sa charpente aluminosilicatée. Sa préparation a été décrite dans la demande de brevet européen EP-A-190949.

L'offrétite est une zéolithe naturelle ou synthétique, appartenant au groupe chabazite. Sa structure a longtemps été considérée comme identique à celle de l'érionite, zéolithe de la même famille, par les similitudes de leurs spectres de diffraction X (HEY M.H. & FEJER E.E., Min. Mag. 33, 66, 1962). Cependant, ces deux structures sont différentes : d'une part, la maille hexagonale de l'offrétite a une dimension suivant l'axe c qui est la moitié de celle de l'érionite (BENNETT J.M. & GARD J.A., Nature 214, 1005, 1967), et ainsi, les raies 1 impaires présentes dans les spectres de diffraction X de l'érionite sont absentes dans les spectres de l'offrétite (GARD J.A. & TAIT J.M., Molecular Sieve Zeolites-1, Advan. Chem. Ser. 101, 230, 1971) ; d'autre part, les séquences d'empilement dans deux zéolithes sont différentes (WHYTE T.T. Jr, WU E.L., KERR G.T. & VENUTO P.B., J. Catal. 20, 88, 1971). L'offrétite possède ainsi une structure beaucoup plus ouverte que l'érionite. Des défauts d'empilement peuvent survenir dans ces structures, donnant lieu à la formation d'érionite T qui est une zéolithe de structure offrétite avec des défauts d'empilement de type érionite.

La structure de l'offrétite a été précisée par de nombreux auteurs et dans le brevet Européen N° 190949. Ce brevet européen décrit l'offrétite utilisée dans la présente invention, décrit ses moyens de caractérisation et ses méthodes préférées de fabrication.

Ainsi, le catalyseur utilisé dans la présente invention ou l'additif que l'on peut ajouter à un catalyseur conventionnel renferme un mélange d'une matrice, d'une zéolithe à structure ouverte dont la définition sera donnée ci-dessous, et d'une offrétite. Un tel catalyseur peut être préparé par toutes méthodes bien connues de l'homme du métier. Ainsi il peut être obtenu par incorporation simultanée de la zéolithe de la famille de l'érionite et de la zéolithe de structure ouverte à la matrice selon les méthodes classiques de préparation des catalyseurs de craquage contenant une zéolithe. Le catalyseur peut être également obtenu par mélange mécanique d'un produit comprenant une matrice et une zéolithe de structure ouverte (voir ci-dessous la définition de la structure ouverte) telle que par exemple une zéolithe Y, et d'un produit comprenant l'offrétite décrite ci-avant qui est de préférence, un mélange de ladite zéolithe avec une matrice.

Le mélange matrice-zéolithe de structure ouverte employé dans la préparation du catalyseur de la présente invention est généralement un catalyseur classique de craquage selon l'art antérieur (par exemple un catalyseur du commerce). La zéolithe peut être une zéolithe X, bêta, oméga, et plus particulièrement une zéolithe Y, notamment les zéolithes Y ultrastables, enrichi es par exemple avec au moins un métal de la famille des terres rares ou les nouvelles zéolithes Y enrichies en silice par des traitements chimiques, appelées LZ210 et décrites notamment dans les brevets US 4.503.023 et 4.534.853, EP. 0.139.291 et 0.124.120 ; la zéolithe de la famille de l'érionite, une offrétite, décrite ci-dessus que l'on emploie pour fabriquer le catalyseur de l'invention peut alors être considérée comme un additif qui peut être employé tel quel en vu de son mélange avec le catalyseur classique de craquage défini ci-avant ou être préalablement incorporé à une matrice, l'ensemble matrice-offrétite (par exemple) constituant alors l'additif que l'on mélange au catalyseur classique de craquage défini ci-avant, par exemple, après une mise en forme adéquate, par mélange mécanique des grains contenant par exemple l'offrétite et des grains de catalyseur classique de craquage.

Dans la présente invention, le catalyseur renferme :

a) De 20 à 95 % et de préférence de 30 à 80 % et d'une manière souvent avantageuse de 50 à 80 % en poids d'au moins une matrice (constituant A) ;

b) De 1 à 70 % et de préférence de 4 à 60 % et d'une manière souvent avantageuse de 10 à 50 % en poids d'au moins une zéolithe de structure ouverte autre qu'une zéolithe de la famille de l'érionite (constituant B) ; le terme zéolithe de structure ouverte désigne dans la présente invention une zéolithe dont l'ouverture des canaux dodécagonaux principaux a une dimension telle qu'elle est équivalente à une ouverture circulaire ayant un diamètre d'au moins 7 Angtröms ($7 \times 10^{-10}$ m) ;

c) De 0,05 à 40 % et de préférence de 0,1 à 30 %, et d'une manière souvent avantageuse de 0,5 à 10 % en poids, d'au moins une offrétite, ayant une teneur en potassium inférieure à 4 % en poids, la teneur totale en métaux alcalins étant de préférence inférieure à 4 % en poids (constituant C).

Le constituant B est généralement choisi dans le groupe formé par les zéolithes X, Y, L, oméga et bêta. On emploie de préférence les zéolithes de structure faujasite et en particulier les zéolithes Y, de préférence stabilisées, couramment appelées ultrastables ou USY, ou enrichies en silice telle la zéolithe LZ210 décrite dans les brevets US 4.403.023 et 4.534.853, EP. 0 139.291 et 0.124.120, soit sous forme au moins partiellement échangée avec des cations des métaux alcalino-terreux et surtout avec des cations des métaux des terres-rares de numéro atomique 57 à 71 inclus, soit sous forme hydrogène.

La somme des pourcentages en poids des constituants A, B et C contenus dans les catalyseurs est égale dans chaque cas à 100 %. Dans le cas où la zéolithe de la famille de l'érionite est ajoutée au catalyseur principal sous forme de particules sphériques séparées dans ce dernier mais de même granulométrie que ce dernier, le poids de la zéolithe de la famille de l'érionite est compris entre 1 et 90% (de préférence entre 5 et 60%) par rapport au poids desdites particules autres que celles du catalyseur principal. Le constituant A comprend au moins une matrice généralement choisie dans le groupe formé par l'alumine, la silice, la magnésie, l'argile, l'oxyde de titane, la zircone, les combinaisons de deux au moins de ces composés et les combinaisons alumine-oxyde de bore.

Bien que l'offrétite, puisse convenir pour la présente invention, on a découvert que les catalyseurs les plus performants pour la production sélective de propylène contenaient offrétites fortement enrichies en silice.

Ainsi, le constituant C, du catalyseur selon l'invention est à base d'au moins une offrétite dont l'ouverture des canaux dodécagonaux principaux est inférieure à $7\times10^{-10}$ m (7 Angströms), (constituant C) ayant de préférence un rapport molaire $SiO_2/Al_2O_3$ supérieur à 15 environ et notamment entre 15 et 1000, de préférence supérieur à 20 et plus partiruclièrement entre 30 et 500, des paramètres cristallins $\vec{a}$ et $\vec{c}$ de la maille élémentaire respectivement d'environ 1,285 à 1,315 nm pour $\vec{a}$ et d'environ 0,748 à 0,757 nm pour $\vec{c}$, et une teneur en potassium inférieure à 1,5 % en poids et de préférence à 0,5 %, la teneur totale en métaux alcalins étant de préférence inférieure à 1,5 % en poids.

Ces offrétites ont également et de préférence les caractéristiques suivantes :
- capacité d'adsorption de benzène, à 25°C et à une pression partielle de 70 torrs (9332 Pa), supérieure à 5 et de préférence à 6 % en poids,
- capacité d'adsorption d'eau, à 25°C pour un rapport P/Po de 0,1 inférieure à 18 % et de préférence inférieure à environ 13 % en poids,
- existence de préférence d'une microporosité secondaire, mesurée par la méthode BJH (définie dans EP N° 190.949), située entre 3 et 5 nm et correspondant à environ 5 à 50 % du volume poreux total de la zéolithe.

Il va également de soi que les traitements modificateurs connus pour l'offrétite peuvent être appliqués à toutes les structures du type érionite-offrétite et notamment à la zéolithe ZSM-34.

Dans la présente invention l'offrétite peut être employée sous forme hydrogène, donc ne contenant pratiquement aucun cation métallique en dehors de la très faible quantité de cations de métaux alcalins (potassium notamment) qui sont des cations résiduels provenant de la synthèse de la zéolithe. L'offrétite peut également être employée sous forme au moins partiellement échangée par des cations métalliques multivalents ; une partie des sites cationiques de la charpente alumino-silicatée est alors occupée par ces cations ; de tels cations sont par exemple des cations des métaux alcalino-terreux et de préférence des cations des métaux des terres-rares de numéro atomique 57 à 71 inclus et plus spécialement du lanthane ; ces cations sont destinés à bloquer l'évolution structurale de l'offrétite particulière employée qui risque en effet de se produire dans les conditions sévères du régénérateur de l'unité industrielle de craquage.

L'offrétite utilisée dans la présente invention, est une offrétite dont la charpente alumino-silicatée est constituée uniquement d'atomes d'aluminium et d'atomes de silicium ; cependant on peut également employer une offrétite telle que décrite ci-avant dans laquelle une partie de l'aluminium et/ou du silicium de la charpente aluminosilicatée est remplacée, à l'issue de la synthèse, par d'autres éléments, métaux ou métalloïdes, tels que par exemple B, P, Ti, Y, Cr, Fe, Mn, Ga, Ge et Zr.

Les conditions générales des réactions de craquage catalytiques sont particulièrement bien connues pour ne pas être répétées ici dans le cadre de la présente invention (voir par exemple USP 3.293.192 ; 3,449,070 ; 4,415,438 ; 3.518.051 ; 3.607.043).

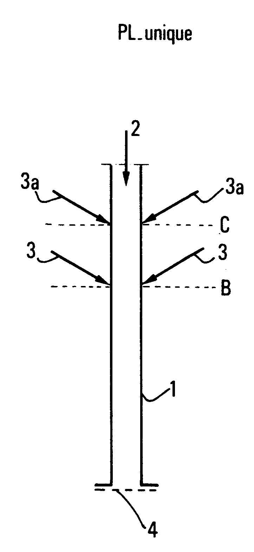

Conformément à l'invention, le catalyseur décrit précédemment est utilisé conjointement avec l'injection d'une essence en amont de la charge dans des conditions telles que cette essence puisse être de nouveau craquée en constituants plus légers ($C_3$, $C_4$). Selon l'invention, on a constaté que pour pouvoir efficacement craquer cette essence, il convenait de l'envoyer dans la partie inférieure de la zone de réaction tubulaire de forme allongée, en un point inférieur à celui où se fait l'injection normale de la charge. En effet, les conditions de température et de C/O (catalyst to oil ratio ou rapport catalyseur/huile) sont telles dans cette zone que le craquage s'effectue dans des conditions sévères. La figure 1 représente une zone de réaction 1 de forme tubulaire allongée (ou "riser") avec circulation ascendante de la charge et du catalyseur (Il n'est pas nécessaire d'expliquer davantage le fonctionnement d'un "dropper"). Le catalyseur pénètre par la conduite 2 à la base de la zone allongée, la charge pénétrant sous forme de liquide dispersé en fines gouttelettes ou atomisé à la base du "riser" mais à un niveau B supérieur à celui de l'admission du catalyseur, par au moins une ouverture 3. Le catalyseur pénètre dans le riser à une température $T_1$ et circule en bas de ce riser avec un débit $D_1$. La charge pénètre dans le riser à une température $T_2$ et avec un débit $D_2$. Au niveau des conduites 3 d'arrivée de la charge, s'effectue le mélange de la charge et du catalyseur. Il se produit un échange thermique entre le catalyseur et la charge, cet échange se traduisant par la vaporisation d'une partie au moins de la charge. On atteint alors un équilibre à une température $T_3$ supérieure à $T_2$, le mélange charge catalyseur, circulant à ce niveau du riser avec un débit $D_3$. La réaction de craquage se produit alors ; et comme cette réaction est endothermique, elle se traduit par une absorption de chaleur. A la partie supérieure du riser 1, on procède par exemple avec un dispositif 4 appelé communément un "T", à la séparation entre les effluents gazeux réactionnels d'une part et les particules de catalyseur d'autre part.

Ainsi, comme expliqué plus haut, l'injection de la fraction d'essence ou LPG, dans le réacteur 1, est effectuée par au moins une conduite 3a. Le craquage de cette fraction légère s'effectue dans des conditions de sévérité plus favorable qui si cette injection avait été effectué par exemple par une conduite 3, essentiellement parce que c'est au voisinage du niveau C de la conduite 3a que la température du catalyseur est la plus chaude. Donc il y a localement à ce niveau C des conditions de craquage sévère (haute température, C/O élevé) qui sont généralement requises pour le craquage de charges légères (essence, LPG). C'est ainsi au niveau C que se produit le craquage de l'essence injectée, entraînant ainsi à ce niveau C, une chute de la température du catalyseur. Ainsi au niveau B, point d'arrivée de la charge, la température est moindre, permettant de réaliser du craquage dans des conditions plus douces, (température modérée, catalyseur déjà amorti) qui précisémment conviennent bien pour craquer la charge avec obtention d'un maximum de L.C.O. L'injection d'essence en 3a est réalisée à une température et dans des conditions qui ne modifient pas la température à la sortie de la zone réactionnelle et conduit en outre à une circulation plus fluide du catalyseur. On a donc pu ainsi concilier deux objectifs apparemment incompatibles par l'utilisation d'au moins deux zones de sévérité différentes, à savoir d'une part une première zone à grande sévérité disposée en bas du riser, située entre l'admission d'une essence et l'admission de la charge et où se produit la production maximum de L.P.G. par craquage d'une essence plus légère que les L.C.O. et d'autre part une autre zone à sévérité plus douce, disposée dans le riser au-dessus d'une conduite 3 d'admission de la charge, cette dernière zone pouvant, suivant l'objectif visé, être elle-même subdivisée en zones à différentes sévérités au fur et à mesure que la température décroît quand on s'élève dans le riser.

Le pourcentage d'essence et/ou de L.P.G. que l'on injecte en amont de la charge conformément à l'invention représente, en volume, environ 5 à 50 % de la charge, de préférence 10 à 30 %.

Les exemples suivants illustrent la présente invention sans en limiter la portée.

EXEMPLE 1 : Préparation d'une offrétite de rapport molaire $SiO_2/Al_2O_3$ égal à 25.

200 g d'une offrétite synthétique dont l'ouverture des canaux dodécagonaux principaux est de $6,4 \times 10^{-10}$ m, (W. MEIER et D.H. OLSON, Atlas of Zeolite Structure Types, 1978) de rapport molaire $SiO_2/Al_2O_3$ égal à 8 contenant 9,9 % en poids de potassium et 2,8 % en poids d'ions tétraméthylammonium ont été calcinés sous air sec, à un débit de 3 l/h/g, pendant 2 heures à 550°C, pour éliminer les cations $TMA^+$.

Le produit obtenu (référencé 1 A) a ensuite été échangé trois fois par une solution 2 M de nitrate d'ammonium, à 100°C pendant 4 heures, sous agitation, avec un rapport volume de solution sur poids de solide sec (V/P) égal à 5.

Le solide obtenu référencé 1B contient 2,8 % en poids de potassium et son rapport molaire $SiO_2/Al_2O_3$ est de 8. Ce solide 1B est appelé produit 1. Son diagramme de diffraction est présenté dans le tableau 1. Ses caractéristiques structurales sont données dans le tableau 2.

L'ouverture des canaux dodécagonaux principaux de l'offrétite n'a pas été modifiée par les traitements.

TABLEAU 1

| Diagramme de diffraction X du produit 1. | | | | | |
|---|---|---|---|---|---|
| 2 thêta | d (nm) | Intensité | 2 thêta | d (nm) | Intensité |
| 7,70 | 1,145 | 66 | 28,10 | 0,317 | 10 |
| 11,75 | 0,752 | 7 | 28,40 | 0,314 | 24 |
| 13,40 | 0,661 | 37 | 30,55 | 0,292 | 5 |
| 14,10 | 0,268 | 7 | 31,25 | 0,286 | 62 |
| 15,50 | 0,572 | 18 | 31,50 | 0,284 | 59 |
| 17,85 | 0,496 | 2 | 33.50 | 0,267 | 24 |
| 19,50 | 0,455 | 26 | | | |
| 20,50 | 0,433 | 54 | | | |
| 23,31 | 0,382 | 31 | | | |
| 23,70 | 0,375 | 100 | | | |
| 24,90 | 0,357 | 66 | | | |
| 26,20 | 0,340 | 1 | | | |
| 27,00 | 0,330 | 23 | | | |
| 27,30 | 0,327 | 7 | | | |

Sur l'offrétite obtenue précédemment (produit 1) contenant 2,8 % en poids de potassium, on a effectué les opérations suivantes :

Premier cycle :

- Self-steaming à 550°C pendant 2 heures (obtention du produit 2A),
- 2 échanges cationiques successifs par $NH_4NO_3$ 2M dans les conditions décrites dans l'exemple 1 (obtention du produit 2B).

Deuxième cycle :

- Self-steaming à 650°C pendant 2 heures (obtention du produit 2C),
- Echange cationique par $NH_4NO_3$ 2M dans les conditions décrites dans l'exemple 1 (obtention du produit 2D),
- 2 attaques acides successives par HCl 0,23 N puis HCl 0,36 N à 100°C pendant 4 heures, avec un rapport V/P égal à 10 (obtention des produits 2E après la première attaque acide et 2F après la deuxième attaque acide).

TABLEAU 2

| | | 1 | 2A | 2B | 2C | 2D | 2E | 2F |
|---|---|---|---|---|---|---|---|---|
| $SiO_2/Al_2O_3$ (mol) | | 8 | | | | | 10 | 25 |
| | S raies ($10^3$) | 277 | 303 | 323 | 298 | 274 | 290,5 | 285 |
| | S fond ($10^3$) | 203 | 193 | 209 | 240 | 256,5 | 269 | 256 |
| | S raies (%) S totale | 58 | 61 | 61 | 55 | 52 | 52 | 53 |
| Cristallinité (%) | | 100 | 105 | 105 | 95 | 90 | 90 | 91 |
| | Paramètres $\vec{a}$ | 13,22 | 13,10 | 13,16 | 13,02 | 13,02 | 13,01 | 13,03 |
| | (Angströms) $\vec{c}$ | 7,52 | 7,50 | 7,51 | 7,51 | 7,51 | 7,51 | 7,52 |

(1 Angströms = $10^{-10}$ m).

A l'issue de ces divers traitements, la cristallinité du produit 2F reste toujours excellente (ses caractéristiques structurales et son diagramme de diffraction sont présentés dans les tableaux 2 et 3), sa teneur en potassium est de 0,7 % en poids, son rapport $SiO_2/Al_2O_3$ est égal à 25, et sa capacité d'adsorption d'eau est de 15 % (P/Po = 0,1). Le solide 2F est appelé produit 2.

TABLEAU 3

| Diagramme de diffraction X du produit 2 | | | | | |
|---|---|---|---|---|---|
| 2 thêta | d (nm) | Intensité | 2 thêta | d (nm) | Intensité |
| 7,85 | 1,13 | 80 | 24,0 | 0,371 | 44 |
| 11,80 | 0,751 | 7 | 24,95 | 0,356 | 47 |
| 13,60 | 0,650 | 100 | 27,40 | 0,325 | 27 |
| 14,15 | 0,625 | 43 | 28,50 | 0,313 | 20 |
| 15,70 | 0,564 | 33 | 30,95 | 0,289 | 14 |
| 18,00 | 0,492 | 2 | 31,70 | 0,282 | 71 |
| 19,70 | 0,451 | 16 | 33,90 | 0,264 | 22 |
| 20,85 | 0,426 | 57 | | | |
| 23,70 | 0,375 | 29 | | | |

EXEMPLE 2 : Préparation d'un catalyseur de craquage à base de l'offrétite préparée à l'exemple 1.

Dans un récipient de 20 litres muni d'un agitateur, on introduit 14 litres d'eau, 600 g de gel sec de pseudoboehmite commercialisé par la société CONDEA et contenant environ 75 % en poids d'alumine, et 2,5 kgs d'une silice-alumine calcinée et broyée à une taille moyenne de particules de 6 microns. 160 cm$^3$ d'acide nitrique pur concentré sont ajoutés sous agitation au mélange précédent, qui est ensuite chauffé à 50°C pendant 45 minutes toujours sous agitation. On ajoute alors 740 g de l'offrétite de l'exemple 1 appelée "produit 2" et on agite pendant 15 minutes. Le mélange est ensuite atomisé dans un atomiseur NIRO, à une température d'entrée de 380°C et une température de sortie de 140°C.

Le catalyseur fini se présente sous forme de microsphères de granulométrie comparable à celle des catalyseurs commerciaux de craquage en lit fluide. Il contient 20 % en poids d'offrétite par rapport au produit sec.

Un tel catalyseur, avant utilisation en craquage, généralement est préalablement calciné pendant 16 heures à 750°C sous une atmosphère constituée de 100 % de vapeur d'eau.

EXEMPLE 3 (non conforme à l'invention) réalisé sans injection d'essence puis réalisé avec injection d'une essence légère en bas de l'élévateur.

Deux essais de craquage catalytique ont été réalisés à partir d'une charge d'hydrocarbures. Le catalyseur renferme 70 % d'une matrice conventionnelle à base d'une silice alumine riche en silice et de kaolin et renferme 30 % d'une zéolithe Y ultrastable USY. Le catalyseur équilibré circulant dans l'unité a les caractéristiques suivantes :

$$\text{surface en } m^2.g^{-1} = 110$$

oxyde de terres rares en % poids = 1,6  
$Na_2O$ % pds = 0,3  
V (ppm) = 4800  
Ni (ppm) = 2800  
Fe (ppm) = 10200.

Dans le premier essai, on utilise un dispositif classique d'injection des grains de catalyseur par une conduite 2 (figure 1) et de charge lourde à craquer par une conduite 3, le deuxième essai a été réalisé à l'aide du dispositif préconisé dans l'invention, comportant l'injection par une conduite 3a de 25% en poids d'essence par rapport à la charge d'essence. Cet exemple n'est toutefois pas conforme à l'invention, puisqu'on n'utilise pas ici le catalyseur spécifique de l'invention. La charge lourde commune aux deux essais a les caractéristiques indiquées ci-dessous :

| CARACTERISTIQUES DE LA CHARGE LOURDE UTILISEE | |
|---|---|
| Densité (20°C) | 0,968 |
| Viscosité (solide à 60°C) | |
| (80°C) | 119,8 |
| cSt (100°C) | 52,2 (52,2 mm$^2$/S) |
| Conradson % poids | 5,1 |
| Na ppm | 2 |
| Ni ppm | 12 |
| V ppm | 1 |
| C % poids | 86,9 |
| H % poids | 12,2 |
| N % poids | 0,35 |
| S % poids | 0,21 |
| N basique % poids | 0,055 |
| C aromatique % poids | 22,3 |
| H aromatique % poids | 2,7 |
| Distillation simulée (°C) | |
| 5 % poids | 367 |
| 10 % poids | 399 |
| 20 % poids | 436 |
| 40 % poids | 495 |
| 60 % poids | 575 |
| FBP | 575. |

L'essence de distillation directe utilisée dans le second essai est une coupe 50-160°C non oléfinique de composition suivante :

| | |
|---|---|
| paraffines % poids | 58 |
| oléfines % poids | 0 |
| naphtènes % poids | 29,5 |
| aromatiques % poids | 12,5. |

Cette essence contient moins de 2 % en poids de composés à 5 atomes de carbone.

Au cours de ces deux essais, les conditions opératoires ont été les suivantes :

```
température d'injection du catalyseur (°C)     771°C
      "              "        de la charge lourde (°C) 210°C
température de l'élévateur au voisinage de
           la conduite 3 (°C)                   537°C
température en haut de l'élévateur (°C)         520°C
C/O = 6, où C est le débit massique de catalyseur et O le
débit massique de la charge lourde.
```

Les résultats obtenus dans les deux essais sont présentés dans le tableau 4 suivant. Les rendements sont exprimés en % pds par rapport à la charge lourde. La conversion de l'essence injectée dans le deuxième essai est 56 % poids.

10

TABLEAU 4

|  | 1er essai (charge lourde) (% poids) | 2ème essai (charge lourde + essence) de distillation directe (%) |
|---|---|---|
| $H_2S$ | 0,10 | 0,10 |
| $H_2 + C_1 + C_2$ | 4,6 | 5,5 |
| $C_3$ | 1,4 | 2,1 |
| $C_3=$ | 4,4 | 6,5 |
| $C_4$ saturés | 4,1 | 5,1 |
| (dont $iC_4$) | (3,3) | (4,1) |
| $C_4=$ totaux | 5,9 | 9,3 |
| Total des gaz | 20,5 | 32,70 |
| Essence ($C_5$-221°C) | 44,9 | 60,0 |
| LCO (221-350°C) | 15,1 | 15,8 |
| Slurry (350$^+$) | 11,4 | 12,2 |
| Coke | 8,1 | 8,5 |
| Conversion | 73,5 | - |
| Total | 100 | 125 |
| Indice d'octane Recherche de l'essence | 92,2 | 90,9 |
| Indice d'octane Moteur "       " | 80,1 | 79,5 |

Le système d'une injection en bas de l'élévateur, sur un catalyseur très chaud, d'essence légère de première distillation permet d'obtenir un rendement amélioré en propylène et aussi en oléfines à 4 atomes de carbone.

EXEMPLE 4 (conforme à l'invention) : Procédé de craquage caractérisé par une injection d'essence légère de distillation directe en bas de l'élévateur et par l'utilisation d'un catalyseur renfermant une offrétite.

Au catalyseur de craquage en lit fluide utilisé dans l'exemple 3, on ajoute 20 %, en poids du catalyseur conforme à l'invention préparé dans l'exemple 2 contenant 20 % en poids d'offrétite ; il y a donc 4 % d'offrétite en poids par rapport à la masse catalytique totale.

Les essais catalytiques sont menés dans les conditions décrites dans l'exemple 3, le rapport C/O = 6 étant défini par le rapport du débit de catalyseur équilibré (de l'exemple 3) et du débit de charge lourde dont les caractéristiques ont été données dans l'exemple 3.

Le tableau suivant n° 5 présente les résultats obtenus. On rappelle sur ce tableau les résultats obtenus à l'exemple 3, lorsqu'il y a injection d'essence.

Il apparait que l'addition de la zéolithe offrétite dans un catalyseur conventionnel permet d'obtenir un gain appréciable de propylène, avec un léger gain appréciable en hydrocarbures insaturés en C4.

## TABLEAU 5

| | Essai avec injection d'une essence et catalyseur conventionnel (% poids) | Essai avec injection d'une essence et catalyseur conforme à l'invention (% poids) |
|---|---|---|
| $H_2S$ | 0,1 | 0,1 |
| $H_2 + C_1 + C_2$ | 5,5 | 6,4 |
| $C_3$ | 2,1 | 3,0 |
| $C_3=$ | 6,5 | 10,3 |
| $C_4$ saturés totaux | 5,1 | 6,1 |
| (dont $iC_4$) | (4,1) | (4,9) |
| $C_4=$ totaux | 9,3 | 12,7 |
| Total des gaz | 28,5 | 38,6 |
| Essence ($C_5$-221°C) | 60,0 | 52,8 |
| LCO (221-350°C) | 15,8 | 13,9 |
| Slurry (350$^+$) | 12,2 | 11,0 |
| Coke | 8,5 | 8,7 |
| Total | 125,0 | 125,0 |

| | | |
|---|---|---|
| Indice d'octane Recherche de l'essence | 90,9 | 93,7 |
| Indice d'octane Moteur de l'essence | 79,5 | 82,2 |

**Revendications**

1. Procédé de craquage catalytique d'une charge d'hydrocarbures en lit fluide ou lit entraîné dans une zone allongée de forme tubulaire essentiellement verticale, les particules catalytiques étant introduites à une extrémité de la zone allongée, la charge étant introduite par au moins une conduite dans la zone allongée à un niveau B en aval du niveau d'admission des particules catalytiques, lesdites particules catalytiques étant séparées de l'effluent réactionnel à l'autre extrémité de la zone allongée, l'effluent réactionnel étant ensuite fractionné en vue d'obtenir diverses fractions notamment des LPG, une essence, une huile relativement légère "L.C.O" et une huile relativement lourde "H.C.O.", le procédé étant tel que l'on injecte une essence dans la zone allongée à un niveau C intermédiaire entre le niveau d'admission des particules catalytiques et le niveau B d'admission de la charge, ladite essence représentant, en volume, 5 à 50% de la charge,

le procédé étant caractérisé en ce que l'on utilise comme catalyseur au moins un produit contenant en poids :

    a) 20 à 95% d'une matrice,

    b) 1 à 70% d'une zéolithe dite à structure ouverte

    c) 0,05 à 40% d'une offrétite dont l'ouverture des canaux dodécagonaux principaux est inférieure à $7 \times 10^{-10}$ m, ayant une teneur en potassium inférieure à 4% en poids.

2. Procédé selon la revendication 1 dans lequel le catalyseur renferme en poids

    (a) 30 à 80% de ladite matrice,

    (b) 4 à 60% de ladite zéolithe à structure ouverte.

    (c) 0,1 à 30% de ladite offrétite.

3. Procédé selon l'une des revendications 1 à 2 dans lequel ladite offrétite possède les caractéristiques suivantes :

    - rapport molaire $SiO_2/Al_2O_3$ supérieur à 15,

    - paramètres cristallins a et c compris respectivement

      pour a entre 1,285 et 1,315 nm

      pour c entre 0,748 et 0,757 nm.

    - teneur en potassium inférieure à 1,5% en poids.

4. Procédé selon la revendication 3 dans lequel ladite offrétite possède également les caractéristiques suivantes :

    - capacité d'adsorption de benzène, à 25°C et à une pression partielle de 70 torrs (9332 Pa), supérieure à 5% en poids,

    - capacité d'adsorption d'eau, à 25°C pour un rapport P/Po de 0,1 inférieure à 18% en poids,

    - existence de préférence d'une microporosité secondaire, mesurée par la méthode BJH, situé entre 3 et 5 nm et correspondant à 5 à 50% du volume poreux total de la zéolithe.

5. Procédé selon la revendication 1 dans lequel ledit catalyseur est utilisé comme additif à un catalyseur conventionnel de craquage.

**Claims**

1. Fluid catalytic cracking process of a hydrocarbon charge, in an extended tubular essentially vertical zone, the catalyst particles being introduced at one end of the extended zone, the charge being introduced into the extended zone by at least one pipe at a level B downstream from the level at which catalytic particles are admitted, said catalytic particles being separated from the reaction effluent at the other end of the extended zone, the reaction effluent then being fractionated in order to obtain various fractions, notably LPGs, a gasoline, a L.C.O. and a H.C.O., a process wherein a gasoline is injected into the extended zone at an intermediate level C between the level at which catalytic particles are admitted and the level B at which the charge is admitted, said gasoline representing 5 to 50 % in volume of the charge, the process being characterized in that at least one product is used as catalyst, containing in weight :

    a) 20 to 95 % of a matrix,

    b) 1 to 70 % of a zeolite with an open structure,

    c) 0.05 to 40 % of an offretite whose principal dodecagonal channel opening is less than $7 \times 10^{-10}$ m, having a potassium content less than 4 % in weight.

2. Process according to claim 1 wherein said catalyst contains in weight :

    a) 30 to 80 % of said matrix,

b) 4 to 60 % of said zeolite with an open structure,

c) 0.1 to 30 % of said offretite.

3. Process according to one of claims 1 to 2 wherein said offretite has the following characteristics :
   - SiO$_2$/Al$_2$O$_3$ molar ratio greater than about 15,
   - a and b crystalline parameters respectively :
     between about 1.285 and about 1.315 nm for a
     between about 0.748 and about 0.757 nm for c.
   - potassium content less than 1.5 % in weight.

4. Process according to claim 3 wherein said offretite also has the following characteristics :
   - benzene adsorption capacity, at 25° C and a partial pressure of 70 torr (9332 Pa), greater than 5 % in weight,
   - water adsorption capacity, at 25° C for a P/Po ratio of 0.1, less than 18 % in weight.
   - preferably, existence of a secondary microporosity, measured with the BJH method, situated between 3 and 5 nm and corresponding to about 5 to 50 % of the total porous volume of the zeolite.

5. Process according to claim 1 wherein said catalyst is used as an additive to a conventional cracking catalyst.

**Patentansprüche**

1. Verfahren zum katalytischen Cracken von Kohlenwasserstoffen im Fließbett oder einem Bett, das sich in einer langgestreckten, röhrenförmigen, im wesentlichen vertikal angeordneten Zone befindet, wobei die Katalysatorpartikel an einem Ende der langgestreckten Zone eingeführt werden und die Einsatzstoffe durch mindestens eine Leitung in die langgestreckte Zone in einer Höhe B, die sich unterhalb der Zuführhöhe der Katalysatorpartikel befindet, wobei die besagten Katalysatorpartikel vom Austrag des Reaktors am anderen Ende der langgestreckten Zone getrennt werden und der Austrag des Reaktors anschließend fraktioniert wird, um diverse Fraktionen zu erhalten, im besonderen die LPG, ein Benzin, ein relativ leichtes Öl "L.C.O." und ein relativ schweres Öl "H.C.O.", wobei das Verfahren so verläuft, daß ein Benzin in die langgestreckte Zone in einer Höhe C, die zwischen der Zuführhöhe der Katalysatorpartikel und der Zuführhöhe B der Zuführung der Einsatzstoffe liegt, eingespritzt wird, wobei das besagte Benzin 5 bis 50% der Einsatzstoffe darstellt, und das Verfahren dadurch charakterisiert wird, daß als Katalysator mindestens ein Produkt benutzt wird, das bezogen auf Gewicht enthält:
   a) 20 bis 95 % einer Matrix,
   b) 1 bis 70% eines Zeolithes mit sogenannter offener Struktur,
   c) 0,05 bis 40% eines Offretits, bei dem die Öffnung der dodekaedrischen Hauptkanäle kleiner als 7 x 10$^{-10}$ m ist und der einen Gehalt an Kalium von weniger als 4 Gew.-% besitzt.

2. Verfahren nach Anspruch 1, in dem der Katalysator, bezogen auf Gewicht umfaßt
   a) 30 bis 80% der besagten Matrix,
   b) 4 bis 60 % des besagten Zeolithes mit offener Struktur,
   c) 0,1 bis 30% des besagten Offretits.

3. Verfahren nach einem der Ansprüche 1 und 2, in dem der besagte Offretit die folgenden Kennzeichen besitzt:
   - molares Verhältnis SiO$_2$/Al$_2$O$_3$ über 15,
   - Kristallparameter a und c liegen zwischen einschließlich, respektive
       für a zwischen 1,285 und 1,315 nm
       für c zwischen 0.748 und 0.757 nm,
   - Gehalt an Kalium unterhalb von 1.5 Gew.-%.

4. Verfahren nach Anspruch 3, in dem der Offretit ebenfalls die folgenden Kennzeichen besitzt:
   - Adsorptionskapazität von Benzol bei 25° C und bei einem Partialdruck von 70 Torr (9332 Pa) über 5 Gew.-%,
   - Adsorptionskapazität von Wasser bei 25° C für ein Verhältnis P/P$_O$ von 0.1 unterhalb von 18 Gew.-%,

- bevorzugtes Vorhandensein einer sekundären Mikroporosität, mittels der BJH-Methode gemessen, die zwischen 3 und 5 nm liegt und 5 bis 50% des totalen Porenvolumens des Zeolithes entspricht.

5. Verfahren nach Anspruch 1, in dem der besagte Katalysator als Zusatz zu einem konventionellen Crackkatalysator benutzt wird.

PL_unique